# EUROPÄISCHE PATENTSCHRIFT

(11) **EP 3 512 736 B1**
(45) Veröffentlichungstag und Bekanntmachung des Hinweises auf die Patenterteilung: **18.08.2021**
(21) Anmeldenummer: 17787335.3
(22) Anmeldetag: 14.09.2017
(51) Int. Cl.: B60L 53/16, B60L 53/18, B60L 53/302

(54) **STECKVERBINDERTEIL MIT GEKÜHLTEN KONTAKTELEMENTEN ZUM LADEN VON ELEKTRISCHEN FAHRZEUGEN**
PLUG CONNECTOR PART HAVING COOLED CONTACT ELEMENTS FOR CHARGING ELECTRICAL VEHICLES
PIÈCE FORMANT UN CONNECTEUR ENFICHABLE COMPRENANT DES ÉLÉMENTS DE CONTACT REFROIDIS SERVANT À LA CHARGE DE VÉHICULES ÉLECTRIQUES

(30) Priorität: 16.09.2016 DE 102016117439
(43) Veröffentlichungstag der Anmeldung: 24.07.2019
(73) Patentinhaber: PHOENIX CONTACT E-Mobility GmbH, 32816 Schieder-Schwalenberg (DE)
(72) Erfinder: FÜHRER, Thomas, 32825 Blomberg (DE); BABEZKI, Robert, 32839 Steinheim (DE)
(74) Vertreter: Muth, Bruno
(86) Internationale Anmeldenummer: PCT/EP2017/073073
(87) Internationale Veröffentlichungsnummer: WO 2018/050724

(56) Entgegenhaltungen:
- EP-A1- 3 043 421
- DE-A1-102010 045 522
- DE-B3-102010 050 562
- DE-U1-202011 050 446
- DE-U1-202011 050 446
- US-A- 3 244 792
- US-A- 5 599 195

## Beschreibung

Die Erfindung betrifft eine Steckverbinderteil nach dem Oberbegriff des Anspruchs 1.

Eine derartiges Steckverbinderteil umfasst einen Steckabschnitt zum steckenden Verbinden mit einem zugeordneten Gegensteckverbinderteil und zumindest ein Kontaktelement, das an dem Steckabschnitt angeordnet ist und zumindest einen elektrisch leitfähigen Kontaktabschnitt zum steckenden Verbinden mit einem zugeordneten Gegenkontaktelement des Gegensteckverbinderteils und einen an den Kontaktabschnitt anschließenden Schaftabschnitt zum Befestigen einer elektrischen Leitung an dem Kontaktelement aufweist.

Ein Steckverbinderteil kann insbesondere als Ladestecker oder Ladebuchse zum Aufladen eines elektrisch angetriebenen Fahrzeugs (auch bezeichnet als Elektrofahrzeug) Verwendung finden. Bei Verwendung als Ladestecker ist beispielsweise ein Kabel einerseits an eine Ladestation angeschlossen und trägt andererseits das Steckverbinderteil, das in ein zugeordnetes Gegensteckverbinderteil in Form einer Ladebuchse an einem Fahrzeug eingesteckt werden kann, um auf diese Weise eine elektrische Verbindung zwischen der Ladestation und dem Fahrzeug herzustellen.

Ladeströme können grundsätzlich als Gleichströme oder als Wechselströme übertragen werden, wobei insbesondere Ladeströme in Form von Gleichstrom eine große Stromstärke, beispielsweise größer als 200 A oder sogar größer als 300 A oder gar 350 A, aufweisen und zu einer Erwärmung des Kabels genauso wie eines mit dem Kabel verbundenen Steckverbinderteils führen können.

Ein aus der DE 10 2010 007 975 B4 bekanntes Ladekabel weist eine Kühlleitung auf, die eine Zuleitung und eine Rückleitung für ein Kühlmittel umfasst und somit einen Kühlmittelfluss hin und zurück in dem Ladekabel ermöglicht. Die Kühlleitung der DE 10 2010 007 975 B4 dient hierbei zum einen zum Abführen von an einem Energiespeicher eines Fahrzeugs entstehender Verlustwärme, zudem aber auch zum Kühlen des Kabels an sich.

Bei einem Ladesystem zum Aufladen eines Elektrofahrzeugs entsteht Wärme nicht nur an dem Kabel, mit dem ein Ladestecker beispielsweise mit einer Ladestation verbunden ist, sondern auch an dem Ladestecker und insbesondere innerhalb des Ladesteckers beispielsweise an Kontaktelementen, über die ein elektrischer Kontakt mit zugeordneten Gegenkontaktelementen beispielsweise auf Seiten einer Ladebuchse an einem Elektrofahrzeug hergestellt wird, wenn der Ladestecker in die Ladebuchse eingesteckt ist. Solche Kontaktelemente, die aus einem elektrisch leitfähigen Metallmaterial, beispielsweise aus einem Kupferwerkstoff, gefertigt sind, erwärmen sich, wenn ein Ladestrom über die Kontaktelemente fließt, wobei grundsätzlich die Kontaktelemente in Abhängigkeit von dem zu übertragenden Ladestroms so zu dimensionieren sind, dass die Kontaktelemente eine hinreichende Stromtragfähigkeit aufweisen und eine Erwärmung an den Kontaktelementen begrenzt ist. Hierbei gilt, dass ein Kontaktelement umso größer zu dimensionieren ist, je größer der zu übertragende Ladestrom ist.

Einer Skalierung der Kontaktelementgröße mit steigendem Ladestrom sind jedoch aufgrund des damit einhergehenden Bauraumbedarfs, des Gewichts und der Kosten Grenzen gesetzt. Es besteht daher ein Bedürfnis danach, einen großen Ladestrom mit einem vergleichsweise klein dimensionierten Kontaktelement zu übertragen.

Bei einem aus der DE 10 2010 050 562 B3 bekannten Steckverbinderteil zum elektrischen Laden eines mit elektrischer Energie antreibbaren Fahrzeugs ist an einem Ladestecker ein Griffteil vorgesehen, durch das hindurch sich Kanäle zum Kühlen insbesondere des Griffteils erstrecken.

Bei einem aus der US 5,909,099 bekannten Steckverbinderteil in Form eines Ladesteckers sind an einem Abschnitt eines Kontaktelements Kühlmittelschläuche angeordnet, durch die hindurch ein Kühlmittel zum Kühlen des Kontaktelements fließen kann.

Aufgabe der vorliegenden Erfindung ist es, ein Steckverbinderteil zur Verfügung zu stellen, das eine aktive Kühlung an einem Kontaktelement bereitstellen kann, um eine große Stromtragfähigkeit trotz vergleichsweise klein dimensioniertem Kontaktelement zu erhalten.

Diese Aufgabe wird durch einen Gegenstand mit den Merkmalen des Anspruchs 1 gelöst.

Demnach weist das Steckverbinderteil ein an dem Schaftabschnitt des zumindest einen Kontaktelements ansetzbares Hülsenelement auf, das einen Körper, eine in dem Körper gebildete Stecköffnung zum Aufnehmen des Schaftabschnitts und einen in oder an dem Körper gebildeten, sich um die Stecköffnung herum erstreckenden Kühlkanal zum Leiten eines Kühlmittels aufweist.

Der Kühlkanal kann sich beispielsweise wendelförmig um die Stecköffnung herum erstrecken.

An dem Kontaktelement wird somit eine aktive Kühlung durch Verwenden eines Hülsenelements bereitgestellt, in dem ein Kühlkanal ausgebildet ist. Das Hülsenelement kann auf den Schaftabschnitt des Kontaktelements aufgesteckt werden, sodass in aufgesteckter Stellung sich der Schaftabschnitt durch die Stecköffnung des Hülsenelements hindurch erstreckt. Dadurch, dass der Kühlkanal sich um die Stecköffnung herum erstreckt, kann über durch den Kühlkanal fließendes Kühlmittel Wärme an dem Schaftabschnitt aufgenommen und von dem Kontaktelement abgeleitet werden.

Ein solches Hülsenelement kann in einfacher Weise an dem Kontaktelement montiert werden. Insbesondere ist ein aufwändiges Verlegen von Kühlschläuchen um das Kontaktelement herum nicht erforderlich.

Zum Kühlen des Kontaktelements wird somit eine Fluidkühlung eingesetzt, im Rahmen derer ein Kühlmittel, beispielsweise eine Kühlmittelflüssigkeit oder ein gasförmiges Fluid (z.B. Luft), entlang des Schaftabschnitts des Kontaktelements geleitet wird. Über das Kühlmittel kann an dem Schaftabschnitt des Kontaktelements entstehende Wärme abgeführt werden, sodass eine Kühlung für das Kontaktelement bereitgestellt und somit einer übermäßigen Erwärmung des Kontaktelements entgegengewirkt wird.

Weist beispielsweise ein Ladestecker mehrere Lastkontakte verwirklichende Kontaktelemente auf, so kann jedes Kontaktelement einzeln gekühlt werden, indem ein Kühlmittel durch den an dem Schaftabschnitt gebildeten Fluidkanal des Kontaktelements geleitet und somit Wärme von dem Kontaktelement abgeführt wird.

Das Kontaktelement kann eine längserstreckte, im Wesentlichen zylindrische Grundform aufweisen, und entsprechend kann der Schaftabschnitt zylindrisch geformt sein.

Das Kontaktelement kann beispielsweise entlang einer Steckrichtung mit einem zugeordneten Gegenkontaktelement steckend in Eingriff zu bringen sein, wobei das Kontaktelement z.B. als Kontaktstift oder als Kontaktbuchse oder auch als sogenannter hermaphroditischer Kontakt ausgeführt sein kann. Bei einer Kontaktpaarung wird z.B. ein Kontaktstift mit einer Kontaktbuchse in Eingriff gebracht, um in steckender Weise eine elektrische Kontaktierung zwischen den Kontaktelementen herzustellen. Die Zylinderachse des Schaftabschnitts erstreckt sich in diesem Fall vorzugsweise parallel zur Steckrichtung. Der zylindrische Schaftabschnitt weist eine äußere Mantelfläche auf, um die herum der Kühlkanal erstreckt ist und über die somit Wärme von dem Kontaktelement abgeführt wird.

Vorzugsweise ist das Kontaktelement mit seinem Kontaktabschnitt und dem Schaftabschnitt einstückig geformt. Das Kontaktelement ist elektrisch leitfähig und aus Metall gefertigt, beispielsweise aus einem Kupferwerkstoff oder einem anderen geeigneten Kontaktmaterial.

Wenn das Hülsenelement an den Schaftabschnitt des zugeordneten Kontaktelements angesetzt ist, umgreift das Hülsenelement mit seinem Körper die Mantelfläche des Schaftabschnitts. Um einen verbesserten Wärmeübergang von dem Schaftabschnitt in den Körper des Hülsenelements zu erhalten, kann hierbei zwischen der Mantelfläche und dem Körper ein besonders gut wärmeleitender Werkstoff, insbesondere ein pastöser Werkstoff in Form einer Wärmeleitpaste, angeordnet sein. Eine solche Wärmeleitpaste kann vor Anordnen des Hülsenelements an dem Schaftabschnitt des Kontaktelements auf den Schaftabschnitt oder in die Stecköffnung des Hülsenelements geschmiert werden, sodass die Wärmeleitpaste sich bei Aufstecken des Hülsenelements auf dem Schaftabschnitt verteilt und somit einen Spalt zwischen der Mantelfläche des Schaftabschnitts und dem Körper des Hülsenelements schließt.

Der Körper des Hülsenelements ist vorzugsweise aus einem elektrisch isolierenden Material, zum Beispiel aus einem mit Keramikpartikeln gefüllten thermoplastischen Kunststoffmaterial, gefertigt und weist vorteilhafterweise eine gute Wärmeleitfähigkeit auf. Dadurch, dass der Körper des Hülsenelements elektrisch isolierend wirkt, ist ein durch den Kühlkanal des Hülsenelements fließendes Kühlmittel gegenüber dem Schaftabschnitt des Kontaktelements elektrisch isoliert, sodass als Kühlmittel ein elektrisch leitfähiges Medium, zum Beispiel Wasser, verwendet werden kann.

Das Hülsenelement ist vorzugsweise in ein Kühlgehäuse eingesetzt, sodass das Hülsenelement zusammen mit dem Kühlgehäuse den Kühlkanal begrenzt. Der Kühlkanal kann beispielsweise in eine umfängliche Außenfläche des Hülsenelements eingeformt sein und ist nach außen hin über das Kühlgehäuse verschlossen, beispielsweise indem das Hülsenelement in eine zugeordnete Öffnung des Kühlgehäuses eingesetzt ist.

Das Hülsenelement kann hierbei über geeignete Dichtelemente, beispielsweise umlaufende Dichtringe in Form von O-Ringen, gegenüber dem Kühlgehäuse abgedichtet sein.

In einer Ausgestaltung kann das Steckverbinderteil beispielsweise (zumindest) ein Paar von zwei Kontaktelementen aufweisen, wobei an dem Schaftabschnitt eines jeden Kontaktelements ein Hülsenelement und ein Kühlgehäuse angeordnet sind. Über ein solches Paar von Kontaktelementen kann beispielsweise, bei Ausgestaltung des Steckverbinderteils als Ladestecker oder als Ladebuchse, ein Ladestrom in Form eines Gleichstroms übertragen werden, sodass die Kontaktelemente Lastkontakte darstellen, an denen es im Betrieb des Steckverbinderteils zu Erwärmungen kommen kann.

Die Kühlgehäuse der beiden Kontaktelemente können, in einer Ausgestaltung, spiegelsymmetrisch zueinander ausgebildet sein. Die Kühlgehäuse können somit miteinander verbunden werden, um einen einheitlichen Block zu schaffen, der in einem Gehäuse des Steckverbinderteils montiert werden kann. Dies vereinfacht die Anordnung und Befestigung der Kühlgehäuse in dem Gehäuse des Steckverbinderteils und auch die Montage.

An dem Kühlgehäuse eines jeden Kontaktelements ist vorzugsweise eine Einlassöffnung zum Einlassen eines Kühlmittels in den Kühlkanal und eine Auslassöffnung zum Auslassen eines Kühlmittels aus dem Kühlkanal gebildet. Um hierbei Kühlmittel den Kühlkanälen der einzelnen Kontaktelemente zuzuleiten, kann ein Verteilerelement vorgesehen sein, das zumindest einen Einlassstutzen zum Einlassen eines Kühlmittels und zumindest einen Auslassstutzen zum Auslassen des Kühlmittels aufweist. Mit dem Einlassstutzen kann eine erste Kühlmittelleitung, die in einem mit dem Steckverbinderteil verbundenen Kabel verlegt ist, verbunden sein, sodass über diese erste Kühlmittelleitung Kühlmittel beispielsweise von einer Ladestation zugeführt werden kann. Mit dem Auslassstutzen ist eine zweite Kühlmittelleitung, die ebenfalls in dem Kabel verlegt ist, verbunden, um Kühlmittel zurück zur Ladestation zu führen. Es wird somit ein Kühlmittelkreislauf bereitgestellt, über den Kühlmittel von Seiten der Ladestation hin zum Steckverbinderteil geleitet wird, um am Steckverbinderteil (insbesondere den Kontaktelementen des Steckverbinderteils) und auch am Kabel Wärme aufzunehmen und abzutransportieren.

Vorteilhafterweise ist ein einheitliches Verteilerelement vorgesehen, das gemeinsam mit den zwei Kühlgehäusen des Paares von Kontaktelementen verbunden ist. Das Verteilerelement und die Kühlgehäuse der Kontaktelemente können fest miteinander verbunden sein und somit eine vormontierte Einheit schaffen, die in dem Gehäuse des Steckverbinderteils zu befestigen ist.

Das Verteilerelement dient dazu, das über eine erste Kühlmittelleitung zugeführte Kühlmittel hin zu den Kühlkanälen der einzelnen Kontaktelemente zu leiten und das Kühlmittel über die zweite Kühlmittelleitung auch wieder zurückzuführen. Hierbei können ein oder mehrere erste Kühlmittelleitungen zum Zuführen des Kühlmittels und ein oder mehrere zweite Kühlmittelleitungen zum Zurückführen des Kühlmittels vorgesehen sein, sodass dem Verteilerelement die Funktion zukommt, das Kühlmittel aus der einen oder den mehreren ersten Kühlmittelleitungen auf die Einlassöffnungen an den Kühlgehäusen zu verteilen und das zurückzuleitende Kühlmittel von den Auslassöffnungen der Kühlgehäuse auch wieder in die eine oder die mehreren zweiten Kühlmittelleitungen einzuspeisen.

Hierzu sind in dem Verteilerelement erste Strömungskanäle zum Verteilen des Kühlmittels von dem zumindest einen Einlassstutzen auf die Einlassöffnungen der Kühlgehäuse und zudem zweite Strömungskanäle zum Einspeisen des Kühlmittels von den Auslassöffnungen der Kühlgehäuse in den zumindest einen Auslassstutzen zum Zurückführen des Kühlmittels ausgebildet.

In einer konkreten Ausgestaltung können beispielsweise ein Einlassstutzen zum Einlassen des Kühlmittels und zwei Auslassstutzen zum Zurückführen des Kühlmittels vorgesehen sein. Das Zuführen des Kühlmittels erfolgt somit über eine (einzige) erste Kühlmittelleitung. Das Zurückführen des Kühlmittels hingegen erfolgt über zwei gesonderte, zweite Kühlmittelleitungen. Über die ersten Strömungskanäle wird das Kühlmittel auf die Einlassöffnungen der Kühlgehäuse verteilt. Über die zweiten Strömungskanälen wird demgegenüber das Kühlmittel von den Auslassöffnungen hin zu den zwei zweiten Auslassstutzen zurückgeführt.

Zusätzlich kann, in einer Ausgestaltung, vorgesehen sein, dass das Verteilerelement zumindest einen dritten Strömungskanal aufweist, der sich zwischen zumindest einem der ersten Stellungskanäle und zumindest einem der zweiten Strömungskanäle erstreckt. Über einen solchen dritten Strömungskanal kann ein Strömungskurzschluss bereitgestellt werden, über den innerhalb des Verteilerelements ein Kühlmittelfluss zwischen den ersten Strömungskanälen und den zweiten Strömungskanälen eingestellt werden kann. Hierbei kann ein Stellelement, beispielsweise in Form eines Schraubelements oder dergleichen, vorgesehen sein, über das der Kühlmittelfluss durch den dritten Strömungskanal eingestellt werden kann. Dies kann z.B. während der Montage durch den Hersteller erfolgen, um die an den Kontaktelementen eingestellte aktive Kühlung zu beeinflussen.

Der der Erfindung zugrunde liegende Gedanke soll nachfolgend anhand der in den Figuren dargestellten Ausführungsbeispiele näher erläutert werden. Es zeigen:
- Fig. 1: eine Ansicht einer Ladestation mit einem daran angeordneten Kabel;
- Fig. 2: eine Ansicht eines Steckverbinderteils in Form eines Ladesteckers;
- Fig. 3: eine Ansicht eines Gehäuseteils des Steckverbinderteils, mit daran angeordneten Kontaktelementen und einer Kühlungseinrichtung zum aktiven Kühlen der Kontaktelemente;
- Fig. 4: eine rückseitige Ansicht der Baugruppe gemäß Fig. 3;
- Fig. 5: eine Explosionsansicht der Baugruppe gemäß Fig. 3;
- Fig. 6: eine gesonderte Ansicht eines Kontaktelements mit einem daran anzuordnenden Hülsenelement und einen Kühlgehäuse;
- Fig. 7A: eine schematische Querschnittsansicht des Hülsenelements an dem Kontaktelement;
- Fig. 7B: eine schematische Ansicht einer Wärmeleitpaste in einem Spalt zwischen dem Hülsenelement und dem Kontaktelement;
- Fig. 8A: eine gesonderte Ansicht eines Kontaktelements mit einem daran angeordneten Hülsenelement und einem Kühlgehäuse;
- Fig. 8B: eine andere perspektivische Ansicht der Anordnung gemäß Fig. 8A;
- Fig. 9A: eine Ansicht zweier Kontaktelemente mit jeweils einem Hülsenelement und einem Kühlgehäuse;
- Fig. 9B: eine andere perspektivische Ansicht der Anordnung gemäß Fig. 9A;
- Fig. 10: eine Ansicht eines Verteilerelements zum Verteilen des Kühlmittels auf die Kühlgehäuse;
- Fig. 11: eine Explosionsansicht des Verteilerelements;
- Fig. 12: eine rückseitige Ansicht des Verteilerelements;
- Fig. 13: eine Seitenansicht des Verteilerelements;
- Fig. 14: eine Vorderansicht des Verteilerelements;
- Fig. 15A: eine teilweise geschnittene Ansicht des Verteilerelements;
- Fig. 15B: die teilweise geschnittene Ansicht gemäß Fig. 15A, in einer anderen Stellung eines Stellelements zum Einstellen eines Kühlmittelflusses über einen in dem Verteilerelement erstreckten dritten Strömungskanal;
- Fig. 16A: eine Schnittansicht entlang der Linie A-A gemäß Fig. 15A;
- Fig. 16B: eine Schnittansicht entlang der Linie B-B gemäß Fig. 15B;
- Fig. 16C: eine Schnittansicht entlang der Linie C-C gemäß Fig. 15A; und
- Fig. 16D: eine Schnittansicht entlang der Linie D-D gemäß Fig. 15B.

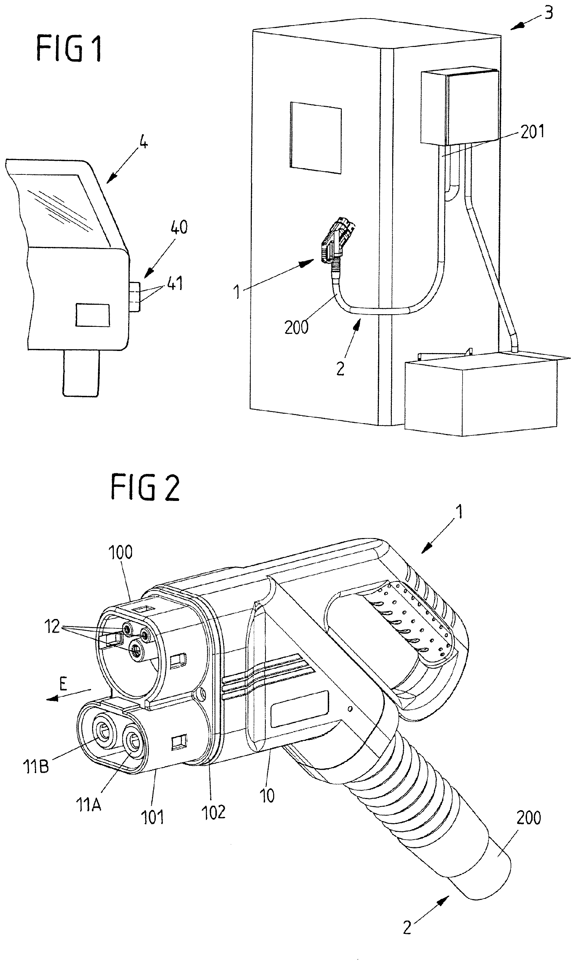

Fig. 1 zeigt eine Ladestation 3, die zum Aufladen eines elektrisch angetriebenen Fahrzeugs 4, auch bezeichnet als Elektrofahrzeug, dient. Die Ladestation 3 ist dazu ausgestaltet, einen Ladestrom in Form eines Wechselstroms oder eines Gleichstroms zur Verfügung zu stellen und weist ein Kabel 2 auf, das mit einem Ende 201 mit der Ladestation 1 und mit einem anderen Ende 200 mit einem Steckverbinderteil 1 in Form eines Ladesteckers verbunden ist.

Wie aus der Ansicht gemäß Fig. 2 ersichtlich, weist das Steckverbinderteil 1 an einem Gehäuse 10 Steckabschnitte 100, 101 auf, mit denen der Steckverbinderteil 1 steckend mit einem zugeordneten Gegensteckverbinderteil 40 in Form einer Ladebuchse an dem Fahrzeug 4 in Eingriff gebracht werden kann. Auf diese Weise kann die Ladestation 3 elektrisch mit dem Fahrzeug 4 verbunden werden, um Ladeströme von der Ladestation 3 hin zu dem Fahrzeug 4 zu übertragen.

Um ein zügiges Aufladen des Elektrofahrzeugs 4 im Rahmen eines sogenannten Schnellladevorgangs zu ermöglichen, weisen die übertragenen Ladeströmen eine große Stromstärke, z.B. größer als 200 A, gegebenenfalls sogar in der Größenordnung von 350 A oder darüber, auf. Aufgrund solch hoher Ladeströme kommt es an dem Kabel 2 und auch am Steckverbinderteil 1 sowie der Ladebuchse 4 zu thermischen Verlusten, die zu einem Erwärmen des Kabels 2, des Steckverbinderteils 1 und der Ladebuchse 4 führen können.

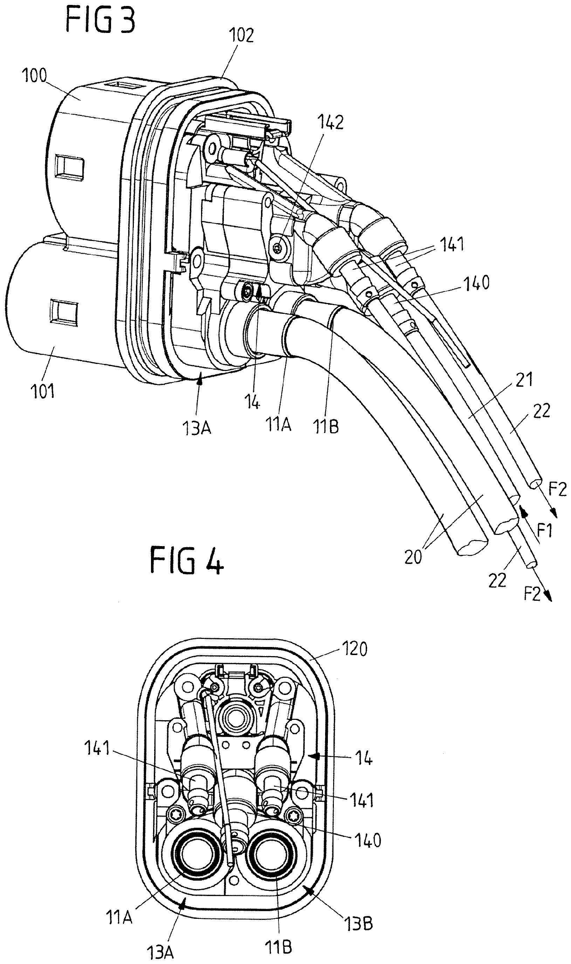

Fig. 3 zeigt eine gesonderte Ansicht eines Gehäuseteils 102 des Gehäuses 10, an dem die Steckabschnitte 100, 101 angeordnet sind und das Kontaktelemente 11A, 11B ,12 (siehe Fig. 2) trägt, die in die Steckabschnitte 100, 101 hineinragen und bei mit dem Gegensteckverbinderteil 40 verbundenem Steckverbinderteil 1 eine elektrische Kontaktierung herstellen. Die an dem unteren Kontaktabschnitt 101 angeordneten Kontaktelemente 11A, 11B dienen hierbei zum Übertragen eines Ladestroms in Form eines Gleichstroms und stellen damit Lastkontakte des Steckverbinderteils 1 dar. Über die an einem Kontakthalter 120 angeordneten Kontaktelemente 12 an dem anderen, oberen Steckabschnitt 100 kann demgegenüber eine Kontaktierung eines Nullleiters erfolgen und können zudem Steuersignale übertragen werden.

Bei dem Steckverbinderteil 1 wird an den die Lastkontakte darstellenden Kontaktelementen 11A, 11B an dem unteren Steckabschnitt 101 eine aktive Kühlung bereitgestellt, im Rahmen derer Kühlmittel an den Kontaktelementen 11A, 11B vorbei geleitet wird, um Wärme an den Kontaktelementen 11A, 11B aufzunehmen und von den Kontaktelementen 11A, 11B abzutransportieren. Wie aus Fig. 3 bis 5 ersichtlich ist, ist hierzu an jedem Kontaktelement 11A, 11B ein Kühlgehäuse 13A, 13B angeordnet, die gemeinsam mit einem Verteilerelement 14 in Verbindung stehen und zum Leiten des Kühlmittels dienen.

Die Kontaktelemente 11A, 11B weisen jeweils einen Kontaktabschnitt 111 in Form einer Kontaktbuchse auf, in die steckend ein Gegenkontaktelement 41 in Form eines Kontaktstifts auf Seiten des Gegensteckverbinderteils 40 eingesteckt werden kann. Über einen an den Kontaktabschnitt 111 anschließenden Schaftabschnitt 110 kann demgegenüber eine elektrische Leitung 20, schematisch eingezeichnet in Fig. 3, angeschlossen werden. Die elektrischen Leitungen 20 sind in dem Kabel 2 geführt und stellen eine elektrische Verbindung des jeweiligen Kontaktelements 11A, 11B mit der Ladestation 3 her.

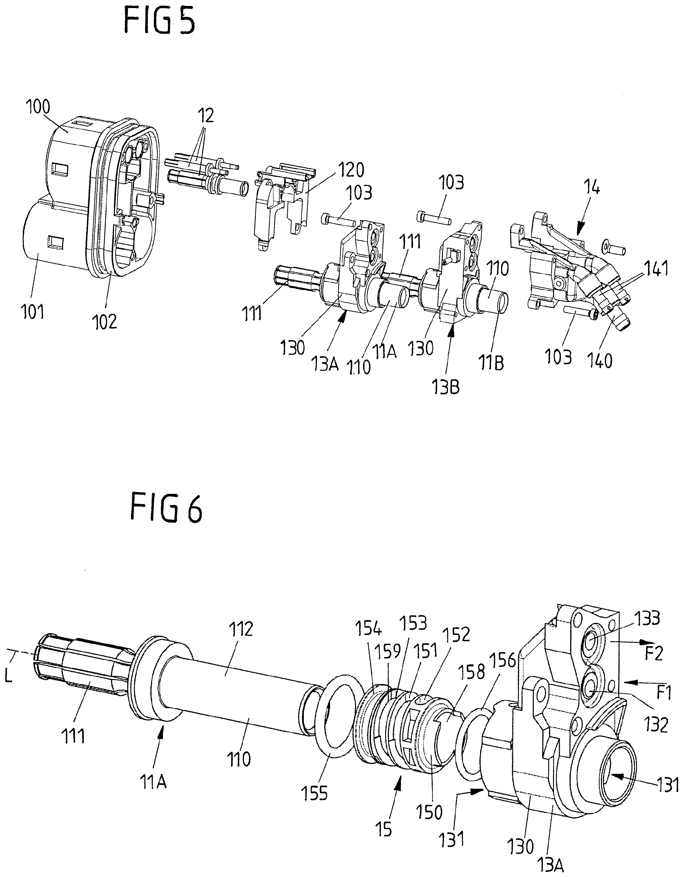

Fig. 6 zeigt in einer gesonderten Explosionsansicht ein Kontaktelement 11A und ein zugeordnetes Kühlgehäuse 13A, das eine Öffnung 131 ausbildet, in das ein Hülsenelement 15 eingesetzt ist.

Das Hülsenelement 15 weist einen Körper 150 mit einer daran gebildeten Stecköffnung 158 auf, in die das zugeordnete Kontaktelement 11A mit dem von dem Kontaktabschnitt 111 abliegenden, zylindrischen Schaftabschnitt 110 eingesetzt ist, sodass das Kontaktelement 11A mit seinem Schaftabschnitt 110 den Körper 150 des Hülsenelements 15 durchgreift.

An dem Hülsenelement 15 ist, mittels einer umlaufenden Rippe 151, an einer von dem Schaftabschnitt 110 abgewandten Seite ein Kühlkanal 159 ausgebildet, der sich wendelförmig um den Schaftabschnitt 110 herum erstreckt und durch den zur Kühlung des Kontaktelements 11A ein Kühlmittel geleitet werden kann. Das Kühlmittel kann hierbei an einem ersten Ende 152 des Kühlkanals 159 eingeleitet und an einem zweiten Ende 153 wieder aus dem Kühlkanal 159 abgeleitet werden, sodass ein Kühlmittelkreislauf durch den Kühlkanal 159 bereitgestellt werden kann.

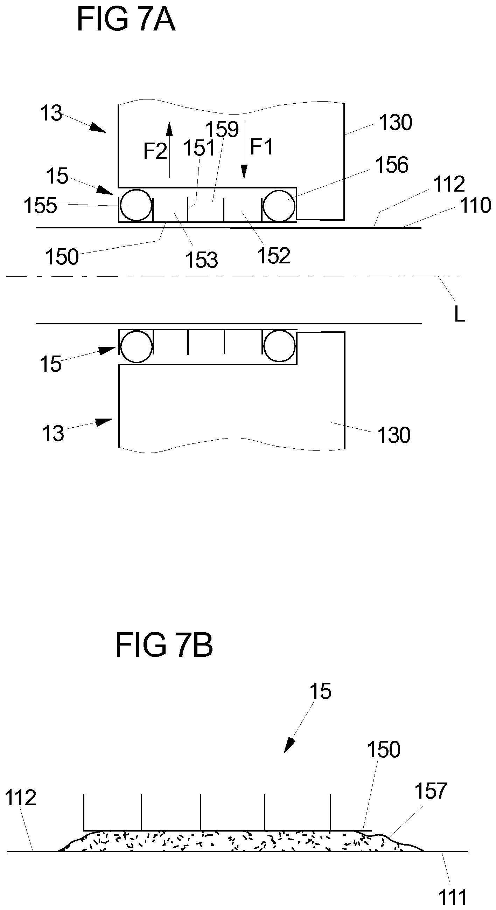

Das Hülsenelement 15 ist, bei montiertem Steckverbinderteil 1, in die Öffnung 131 innerhalb eines Körpers 130 des Kühlgehäuses 13A eingesetzt und über Dichtelemente in Form von Dichtringen 155, 156 gegenüber dem Kühlgehäuse 13A abgedichtet, wie dies schematisch in Fig. 7A veranschaulicht ist. Ein erstes Dichtelement 155 liegt in einem umlaufenden Sitz 154 an dem Körper 150 des Hülsenelements 15 ein und dichtet das Hülsenelement 15 an einem axialen Ende gegenüber dem Körper 130 des Kühlgehäuses 13A ab. Ein zweites Dichtelement 156 kommt demgegenüber an dem anderen axialen Ende des Hülsenelements 15 zwischen dem Hülsenelement 15 und dem Körper 130 des Kühlgehäuses 13A zu liegen, sodass das Hülsenelement 15 auch an diesem anderen Ende gegenüber dem Körper 130 abgedichtet ist.

Der Schaftabschnitt 110 weist eine zylindrische Form auf, und entsprechend weist das Hülsenelement 15 eine hohlzylindrische Form auf. Der Schaftabschnitt 110 greift in montiertem Zustand durch die Stecköffnung 158 innerhalb des Körpers 150 hindurch, wobei zwischen dem Körper 150 und dem Schaftabschnitt 110 vorzugsweise eine Wärmeleitpaste 157 angeordnet ist, wie dies schematisch in Fig. 7B dargestellt ist. Mittels der Wärmeleitpaste 157 kann ein Spalt zwischen dem Körper 150 des Hülsenelements 15 einerseits und einer zylindrischen Mantelfläche 112 des Schaftabschnitts 110 des Kontaktelements 11A andererseits geschlossen werden, sodass ein günstiger Wärmeübergang zwischen dem Schaftabschnitt 110 und dem Hülsenelement 15 erreicht wird.

Das Kontaktelement 11A ist einstückig aus einem elektrisch leitfähigen Material, beispielsweise einem Kupferwerkstoff gefertigt. Das Zwischenelement 15 genauso wie das Kühlgehäuse 13A sind demgegenüber vorzugsweise aus einem elektrisch isolierenden Werkstoff, beispielsweise einem Kunststoffwerkstoff gefertigt, sodass ein durch den Kühlkanal 159 fließendes Kühlmittel elektrisch von dem Kontaktelement 11A isoliert ist. Dies ermöglicht, ein elektrisch leitfähiges Kühlmittel, beispielsweise ein wasserhaltiges Kühlmittel, zu verwenden.

Insbesondere das Hülsenelement 15 (und ggf. auch das Kühlgehäuse 13A) kann beispielsweise aus einem mit Keramikpartikeln gefüllten Kunststoffmaterial, beispielsweise einem thermoplastischen Kunststoff, gefertigt sein. Das Hülsenelement 15 und auch das Kühlgehäuse 13A weisen vorzugsweise eine gute Wärmeleitfähigkeit auf, sodass Wärme in effizienter Weise von dem durch das Kühlgehäuse 13A strömenden Kühlmittel aufgenommen werden kann.

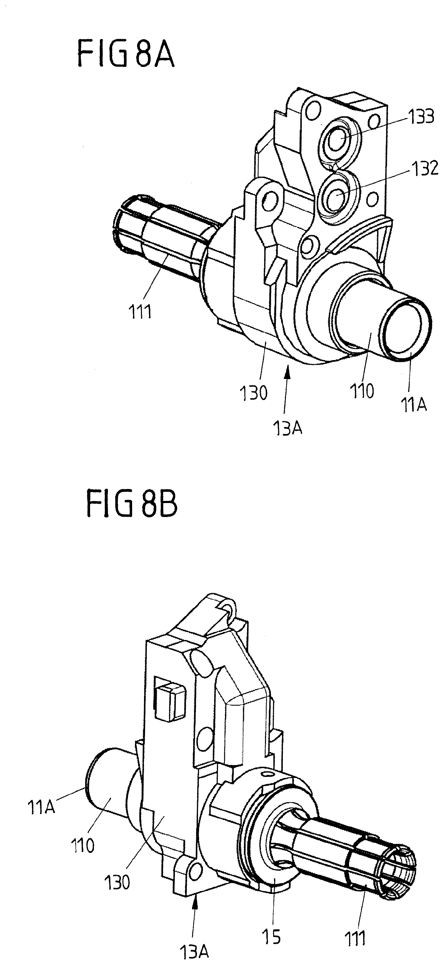

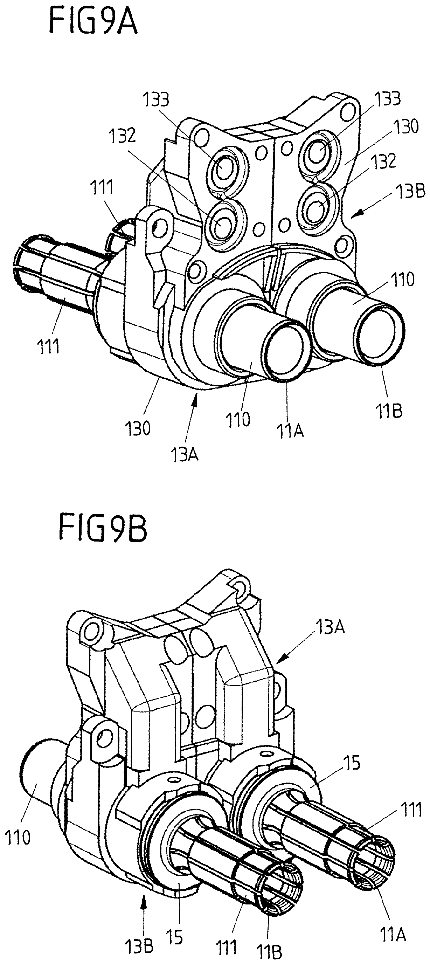

Fig. 8A und 8B zeigen gesonderte Ansichten eines Kontaktelements 11A mit einem daran angeordneten Kühlgehäuse 13A, während Fig. 9A und 9B die beiden die Lastkontakte verwirklichenden Kontaktelemente 11A, 11B gemeinsam mit den daran angeordneten Kühlgehäusen 13A, 13B darstellen.

Wie aus Fig. 9A, 9B ersichtlich ist, sind die Kühlgehäuse 13A, 13B der Kontaktelemente 11A, 11B spiegelsymmetrisch ausgebildet und können derart aneinander angesetzt werden, dass sich ein einheitlicher Block ergibt. Über Befestigungselemente 103 in Form von Schrauben (siehe Fig. 5) kann dieser Block der Kühlgehäuse 13A, 13B zusammen mit dem daran angeordneten Verteilerelement 14 in dem Gehäuse 10 des Steckverbinderteils 1 festgelegt werden, sodass sich eine einfache, belastbare Montage der Kühlgehäuse 13A, 13B in dem Gehäuse 10 ergibt.

Wie aus Fig. 6 und Fig. 8A und 9A ersichtlich ist, sind an den Kühlgehäusen 13A, 13B jeweils eine Einlassöffnung 132 und eine Auslassöffnung 133 ausgebildet. Die Einlassöffnung 132 eines jeden Kühlgehäuses 13A, 13B steht in Strömungsverbindung mit dem ersten Ende 152 des Kühlkanals 159 an dem Hülsenelement 15, sodass über die Einlassöffnung 132 ein Kühlmittel in eine Flussrichtung F1 in den Kühlkanal 159 eingeleitet werden kann. Die Auslassöffnung 133 eines jeden Kühlgehäuses 13A, 13B steht demgegenüber in Strömungsverbindung mit dem zweiten Ende 153 des Kühlkanals 159, sodass über die Auslassöffnung 133 Kühlmittel in eine Flussrichtung F2 aus dem Kühlkanal 159 abgeleitet werden kann. Die Strömungsverbindung wird jeweils über Strömungskanäle hergestellt, die sich durch den Körper 130 des jeweiligen Kühlgehäuses 13A, 13B erstrecken.

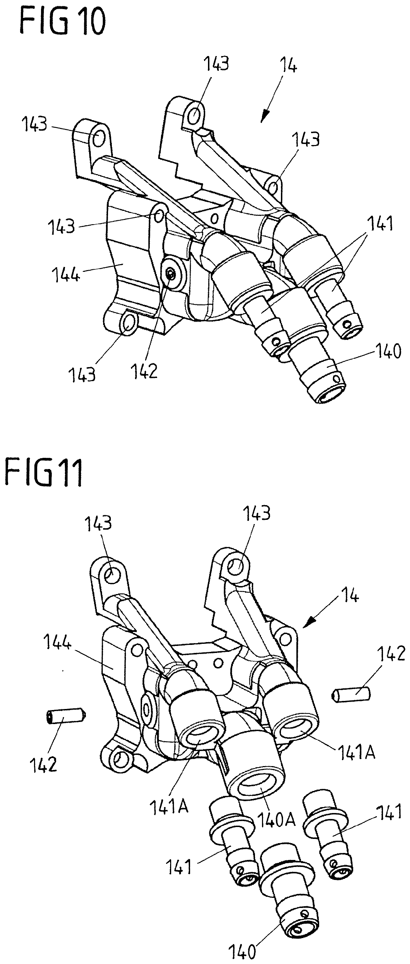

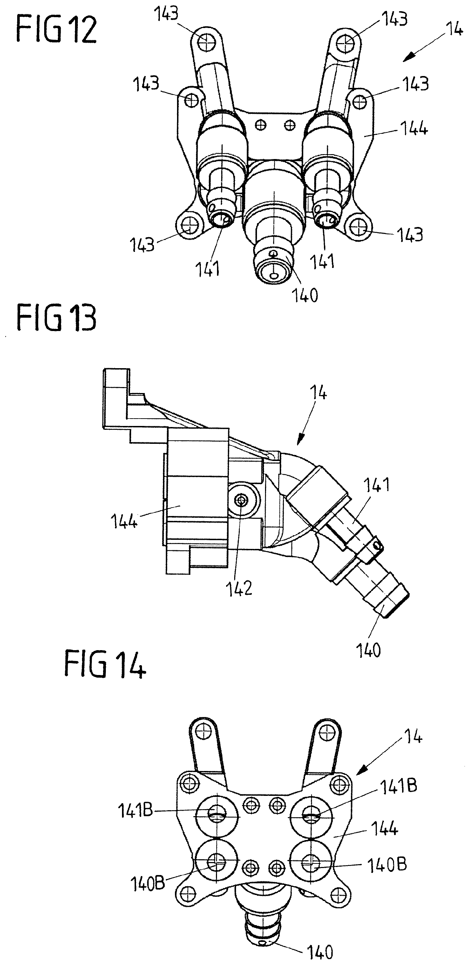

Fig. 10 bis 16A-16D zeigen Ansichten des Verteilerelements 14, das fest mit dem Block der Kühlgehäuse 13A, 13B verbunden ist und dazu dient, Kühlmittel aus einer ersten Kühlmittelleitung 21 (siehe Fig. 3) auf die Einlassöffnungen 132 der Kühlgehäuse 13A, 13B zu verteilen und Kühlmittel aus den Auslassöffnungen 133 über zwei getrennte Kühlmittelleitungen 22 (siehe Fig. 3) zurückzuleiten. Die Kühlmittelleitungen 21, 22 sind jeweils innerhalb des Kabels 2 verlegt und werden von der Ladestation 3 gespeist bzw. führen das Kühlmittel zurück zur Ladestation 3, sodass ein geschlossener Kühlmittelkreislauf zum Kühlen der Kontaktelemente 11A, 11B an dem Steckverbinderteil 1 geschaffen wird.

Über Befestigungsstellen 143 kann das Verteilerelement 14 einerseits mit dem Block der Kühlgehäuse 13A, 13B verbunden und andererseits in dem Gehäuse 10 des Steckverbinderteils 1 festgelegt werden. Hierzu können beispielsweise Befestigungselemente 103 (siehe Fig. 5) in Form von Schrauben zum Einsatz kommen.

Das Verteilerelement 14 weist einen Körper 144 auf, an den die erste Kühlmittelleitung 21 zum Zuführen des Kühlmittels über einen in eine Öffnung 140A eingesetzten Einlassstutzen 140 angeschlossen ist. Die beiden Kühlmittelleitungen 22 zum Zurückführen des Kühlmittels sind demgegenüber an in Öffnungen 141A eingesetzte Auslassstutzen 141 angeschlossen (siehe zum Beispiel Fig. 10 und 11).

Innerhalb des Körpers 144 des Verteilerelements 14 erstrecken sich Strömungskanäle 145-148, die zum Leiten des Kühlmittels hin zu den Einlassöffnungen 132 und weg von den Auslassöffnungen 133 dienen.

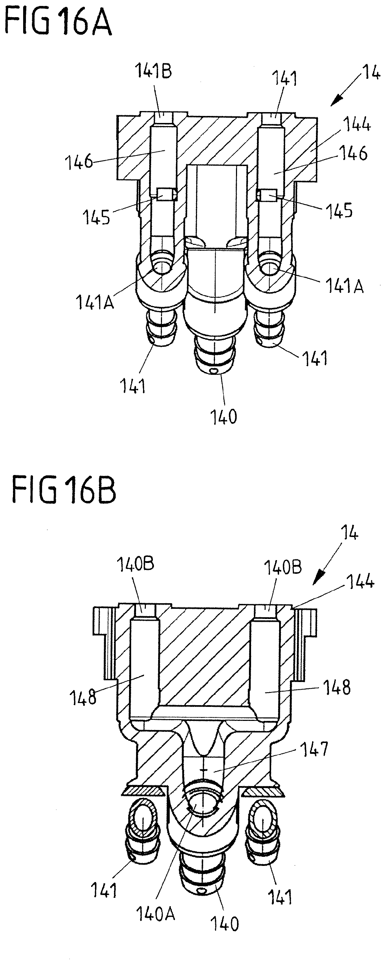

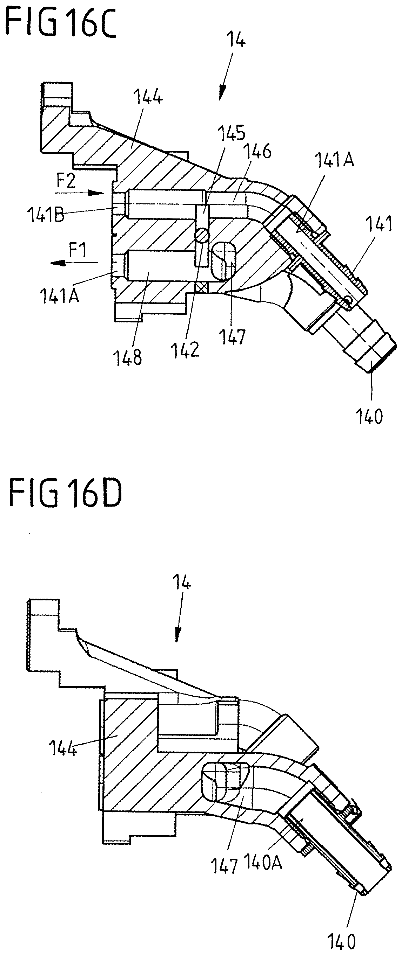

Wie aus der Querschnittsansicht gemäß Fig. 16B ersichtlich, steht der Einlassstutzen 140 über einen Strömungskanal 147 mit zwei verzweigten Strömungskanälen 148 in Strömungsverbindung, die in Öffnungen 140B münden. Die Öffnungen 140B fluchten mit den Einlassöffnungen der Kühlgehäuse 13A, 13B, wobei der Übergang zwischen dem Verteilerelement 14 und den Kühlgehäusen 13A, 13B um die Öffnungen 140B herum über geeignete Dichtelemente abgedichtet ist. Über die Strömungskanäle 145-148 kann somit ein Kühlmittel aus der Kühlmittelleitung 21 und dem Einlassstutzen 140 in die Einlassöffnungen 132 der Kühlgehäuse 13A, 13B geleitet und dem Kühlkanal 159 eines jeden Hülsenelements 15 zugeführt werden.

Wie zudem aus der Querschnittsansicht gemäß Fig. 16A ersichtlich, stehen die Auslassstutzen 141 über Strömungskanäle 146 mit Öffnungen 141B in Strömungsverbindung. Die Öffnungen 141B fluchten mit den Auslassöffnungen 133 der Kühlgehäuse 13A, 13B, wobei ein Übergang zwischen dem Verteilerelement 14 und den Kühlgehäusen 13A, 13B wiederum über geeignete Dichtelemente abgedichtet ist. Über die Strömungskanäle 146 kann somit das Kühlmittel aus den Auslassöffnungen 133 hin zu den Auslassstutzen 141 geleitet werden.

Wie aus der Querschnittansicht gemäß Fig. 16C ersichtlich, ist jeder einlassseitige Strömungskanal 148 über einen quer erstreckten, weiteren Strömungskanal 145 mit einem darüber liegenden, auslassseitigen Strömungskanal 146 strömungsverbunden, sodass ein Kurzschluss zwischen dem einlassseitigen Strömungskanal 148 und dem auslassseitigen Strömungskanal 146 geschaffen wird. Über diesen zusätzlichen Strömungskanal 145 kann somit eine Kühlmittelströmung direkt vom Einlass zum Auslass bewirkt werden, unter Umgehung der Kühlgehäuse 13A, 13B.

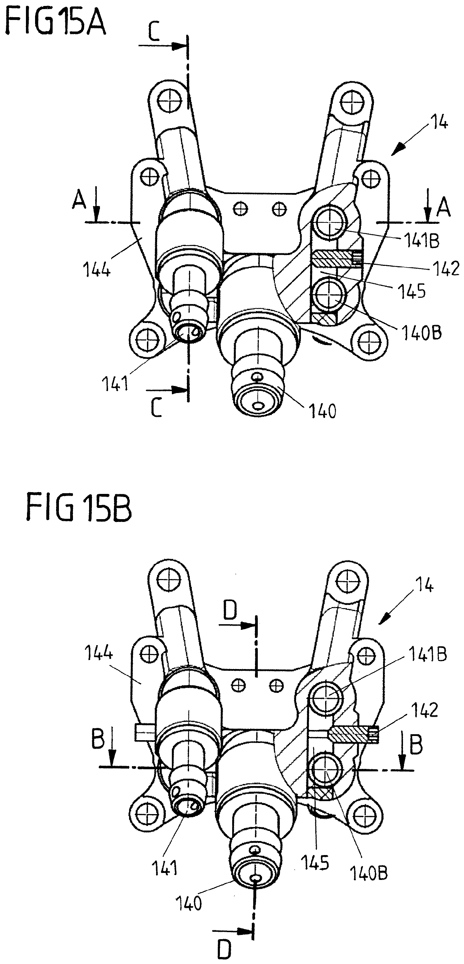

In die Strömungskanäle 145 ragt je ein Stellelement 142 hinein, das beispielsweise als Schraubelement ausgebildet sein kann und von außerhalb des Körpers 144 verstellt werden kann (siehe zum Beispiel Fig. 10 und Fig. 11). In einer ersten, eingeschraubten Stellung des Stellelements 142, dargestellt in Fig. 15A, ist der Strömungskanal 145 verschlossen, sodass keine umgehende Strömung direkt vom Einlass zum Auslass fließen kann. In einer anderen, ganz oder teilweise ausgeschraubten Stellung, dargestellt in Fig. 15B, wird der Strömungskanal 145 demgegenüber zumindest teilweise freigegeben, sodass eine umgehende Strömung direkt vom Einlass zum Auslass möglich ist.

Mittels der den beiden Strömungskanälen 145 beidseits des Körpers 144 zugeordneten Stellelemente 142 ist somit eine Einstellung der Kühlung an den Kontaktelementen 11A, 11B möglich, sodass die Kühlleistung an den Kontaktelementen 11A, 11B in gewünschter Weise justiert werden kann.

Der der Erfindung zugrunde liegende Gedanke ist nicht auf das vorangehend geschilderte Ausführungsbeispiel beschränkt, sondern lässt sich grundsätzlich auch in gänzlich andersgearteter Weise verwirklichen.

Bei dem dargestellten Ausführungsbeispiel des Steckverbinderteils werden Lastkontakte zum Übertragen eines Gleichstroms gekühlt. Grundsätzlich ist eine Kühlung auch an Kontaktelementen, die zum Übertragen eines Wechselstroms dienen, denkbar und möglich.

Ein Steckverbinderteil der hier beschriebenen Art kann vorteilhaft als Ladestecker oder auch als Ladebuchse in einem Ladesystem zum Aufladen eines elektrisch betriebenen Fahrzeugs verwendet werden. Denkbar und möglich ist jedoch auch eine gänzlich andere Verwendung eines solchen Steckverbinderteils außerhalb eines Ladesystems.

### Bezugszeichenliste

- 1: Steckverbinderteil (Ladestecker)
- 10: Gehäuse
- 100, 101: Steckabschnitt
- 102: Gehäuseteil
- 103: Befestigungselemente
- 11A, 11B, 12: Kontaktelemente
- 110: Schaft
- 111: Kontaktbuchse
- 112: Mantelfläche
- 120: Kontakthalter
- 13A, 13B: Kühlgehäuse
- 130: Körper
- 131: Öffnung
- 132,133: Öffnung
- 14: Verteilerelement
- 140: Einlassstutzen
- 140A, 140B: Öffnung
- 141: Auslassstutzen
- 141A, 141B: Öffnung
- 142: Stellelement
- 143: Befestigungsstellen
- 144: Körper
- 145-148: Strömungskanal
- 15: Hülsenelement
- 150: Körper
- 151: Rippe
- 152,153: Ende
- 154: Sitz
- 155, 156: Dichtelement
- 157: Wärmeleitpaste
- 158: Stecköffnung
- 159: Kühlkanal
- 2: Ladekabel
- 20: Elektrische Leitung
- 200,201: Ende
- 21,22: Kühlmittelleitung
- 3: Ladestation
- 4: Fahrzeug
- 40: Ladebuchse
- 41: Gegenkontaktelement
- E: Steckrichtung
- F1, F2: Flussrichtung

## Patentansprüche

1. Steckverbinderteil (1), mit
- einem Steckabschnitt (100, 101) zum steckenden Verbinden mit einem zugeordneten Gegensteckverbinderteil (40) und
- zumindest einem Kontaktelement (11A, 11B), das an dem Steckabschnitt (100, 101) angeordnet ist und zumindest einen elektrisch leitfähigen Kontaktabschnitt (111) zum steckenden Verbinden mit einem zugeordneten Gegenkontaktelement (41) des Gegensteckverbinderteils (40) und einen an den Kontaktabschnitt (111) anschließenden Schaftabschnitt (110) zum Befestigen einer elektrischen Leitung (20) an dem Kontaktelement (11A, 11B) aufweist,
**gekennzeichnet durch**
ein an den Schaftabschnitt (110) des zumindest einen Kontaktelements (11A, 11B) ansetzbares Hülsenelement (15), das einen Körper (150), eine in dem Körper (150) gebildete Stecköffnung (158) zum Aufnehmen des Schaftabschnitts (110) und einen in oder an dem Körper (150) gebildeten, sich um die Stecköffnung (158) herum erstreckenden Kühlkanal (159) zum Leiten eines Kühlmittels aufweist.

2. Steckverbinderteil (1) nach Anspruch 1, **dadurch gekennzeichnet, dass** sich der Kühlkanal (159) wendelförmig um die Stecköffnung (158) herum erstreckt.

3. Steckverbinderteil (1) nach Anspruch 1 oder 2, **dadurch gekennzeichnet, dass** der Schaftabschnitt (110) zylindrisch ausgebildet ist.

4. Steckverbinderteil (1) nach einem der Ansprüche 1 bis 3, **dadurch gekennzeichnet, dass** das Kontaktelement (11A, 11B) entlang einer Steckrichtung (E) an das zugeordnete Gegenkontaktelement (41) ansteckbar ist, wobei der Schaftabschnitt (110) eine umfänglich um die Steckrichtung (E) erstreckte Mantelfläche (112) aufweist und der Körper (150) des Hülsenelements (15) bei in der Stecköffnung (158) aufgenommenem Schaftabschnitt (110) sich um die Mantelfläche (112) herum erstreckt.

5. Steckverbinderteil (1) nach Anspruch 4, **dadurch gekennzeichnet, dass** bei in der Stecköffnung (158) aufgenommenem Schaftabschnitt (110) zwischen der Mantelfläche (112) und dem Körper (150) des Hülsenelements (15) eine Wärmeleitpaste angeordnet ist.

6. Steckverbinderteil (1) nach einem der vorangehenden Ansprüche, **dadurch gekennzeichnet, dass** der Körper (150) des Hülsenelements (15) aus einem elektrisch isolierenden Material gefertigt ist und bei in der Stecköffnung (158) aufgenommenem Schaftabschnitt (110) ein durch den Kühlkanal (159) fließendes Kühlmittel über den Körper (150) elektrisch von dem Schaftabschnitt (110) isoliert ist.

7. Steckverbinderteil (1) nach einem der vorangehenden Ansprüche, **dadurch gekennzeichnet, dass** das Hülsenelement (15) in ein Kühlgehäuse (13A, 13B) eingesetzt ist.

8. Steckverbinderteil (1) nach Anspruch 7, **dadurch gekennzeichnet, dass** das Hülsenelement (15) zusammen mit dem Kühlgehäuse (13A, 13B) den Kühlkanal (159) begrenzt.

9. Steckverbinderteil (1) nach Anspruch 7 oder 8, **dadurch gekennzeichnet, dass** das Steckverbinderteil (1) ein Paar von zwei Kontaktelementen (11A, 11B) aufweist, wobei an dem Schaftabschnitt (110) eines jeden Kontaktelements (11A, 11B) ein Hülsenelement (15) und ein Kühlgehäuse (13A, 13B) angeordnet sind.

10. Steckverbinderteil (1) nach Anspruch 9, **dadurch gekennzeichnet, dass** die Kühlgehäuse (13A, 13B) der beiden Kontaktelemente (11A, 11B) spiegelsymmetrisch zueinander ausgebildet und miteinander verbunden sind.

11. Steckverbinderteil (1) nach einem der vorangehenden Ansprüche, **gekennzeichnet durch** ein Verteilerelement (14), das zumindest einen Einlassstutzen (140) zum Einlassen eines Kühlmittels und zumindest einen Auslassstutzen (141) zum Auslassen des Kühlmittels aufweist.

12. Steckverbinderteil (1) nach Anspruch 11, **dadurch gekennzeichnet, dass** das Verteilerelement (14) fest mit Kühlgehäusen (13A, 13B) eines Paars von Kontaktelementen (11A, 11B) verbunden ist.

13. Steckverbinderteil (1) nach Anspruch 12, **dadurch gekennzeichnet, dass** der zumindest eine Einlassstutzen (140) über erste Strömungskanäle (148) mit einer Einlassöffnung (132) jedes Kühlgehäuses (13A, 13B) zum Einlassen eines Kühlmittels in den Kühlkanal (159) des an dem Kühlgehäuse (13A, 13B) angeordneten Hülsenelements (15) in Strömungsverbindung steht und der zumindest eine Auslassstutzen (141) über zweite Strömungskanäle (146) mit einer Auslassöffnung (133) jedes Kühlgehäuses (13A, 13B) zum Auslassen eines Kühlmittels aus dem Kühlkanal (159) des an dem Kühlgehäuse (13A, 13B) angeordneten Hülsenelements (15) in Strömungsverbindung steht.

14. Steckverbinderteil (1) nach Anspruch 13, **dadurch gekennzeichnet, dass** das Verteilerelement (14) zumindest einen dritten Strömungskanal (145) aufweist, der sich zwischen zumindest einem der ersten Strömungskanäle (148) und zumindest einem der zweiten Strömungskanäle (146) für einen Kühlmittelfluss zwischen den ersten Strömungskanälen (148) und den zweiten Strömungskanälen (146) erstreckt.

15. Steckverbinderteil (1) nach Anspruch 14, **dadurch gekennzeichnet, dass** ein Kühlmittelfluss zwischen den ersten Strömungskanälen (148) und den zweiten Strömungskanälen (146) über den zumindest einen dritten Strömungskanal (145) über ein Stellelement (142) einstellbar ist.

## Claims

1. Plug-in connector part (1), comprising
- a plug-in section (100, 101) for plug-connection to an associated mating plug-in connector part (40) and
- at least one contact element (11A, 11B) which is arranged on the plug-in section (100, 101) and has at least one electrically conductive contact section (111) for plug-connection to an associated mating contact element (41) of the mating plug-in connector part (40) and one shaft section (110), which adjoins the contact section (111), for fastening an electrical line (20) to the contact element (11A, 11B),
**characterized by**
a sleeve element (15) which can be attached to the shaft section (110) of the at least one contact element (11A, 11B) and has a body (150), a plug-in opening (158), which is formed in the body (150), for receiving the shaft section (110), and a cooling duct (159), which is formed in or on the body (150) and extends around the plug-in opening (158), for conducting a coolant.

2. Plug-in connector part (1) according to Claim 1, **characterized in that** the cooling duct (159) extends around the plug-in opening (158) in a helical manner.

3. Plug-in connector part (1) according to Claim 1 or 2, **characterized in that** the shaft section (110) is of cylindrical design.

4. Plug-in connector part (1) according to one of Claims 1 to 3, **characterized in that** the contact element (11A, 11B) can be plugged onto the associated mating contact element (41) along a plug-in direction (E), wherein the shaft section (110) has a lateral surface (112) which extends circumferentially around the plug-in direction (E) and the body (150) of the sleeve element (15) extends around the lateral surface (112) when the shaft section (110) is received in the plug-in opening (158) .

5. Plug-in connector part (1) according to Claim 4, **characterized in that** a thermally conductive paste is arranged between the lateral surface (112) and the body (150) of the sleeve element (15) when the shaft section (110) is received in the plug-in opening (158).

6. Plug-in connector part (1) according to one of the preceding claims, **characterized in that** the body (150) of the sleeve element (15) is manufactured from an electrically insulating material and a coolant flowing through the cooling duct (159) is electrically insulated from the shaft section (110) by means of the body (150) when the shaft section (110) is received in the plug-in opening (158).

7. Plug-in connector part (1) according to one of the preceding claims, **characterized in that** the sleeve element (15) is inserted into a cooling housing (13A, 13B) .

8. Plug-in connector part (1) according to Claim 7, **characterized in that** the sleeve element (15), together with the cooling housing (13A, 13B), delimits the cooling duct (159).

9. Plug-in connector part (1) according to Claim 7 or 8, **characterized in that** the plug-in connector part (1) has a pair of two contact elements (11A, 11B), wherein a sleeve element (15) and a cooling housing (13A, 13B) are arranged on the shaft section (110) of each contact element (11A, 11B).

10. Plug-in connector part (1) according to Claim 9, **characterized in that** the cooling housings (13A, 13B) of the two contact elements (11A, 11B) are designed with mirror-image symmetry in relation to one another and are connected to one another.

11. Plug-in connector part (1) according to one of the preceding claims, **characterized by** a distributor element (14) which has at least one inlet port (140) for letting in a coolant and at least one outlet port (141) for letting out the coolant.

12. Plug-in connector part (1) according to Claim 11, **characterized in that** the distributor element (14) is fixedly connected to cooling housings (13A, 13B) of a pair of contact elements (11A, 11B).

13. Plug-in connector part (1) according to Claim 12, **characterized in that** the at least one inlet port (140) is flow-connected via first flow ducts (148) to an inlet opening (132) of each cooling housing (13A, 13B) for letting a coolant into the cooling duct (159) of the sleeve element (15) that is arranged on the cooling housing (13A, 13B), and the at least one outlet port (141) is flow-connected via second flow ducts (146) to an outlet opening (133) of each cooling housing (13A, 13B) for letting a coolant out of the cooling duct (159) of the sleeve element (15) that is arranged on the cooling housing (13A, 13B).

14. Plug-in connector part (1) according to Claim 13, **characterized in that** the distributor element (14) has at least one third flow duct (145) which extends between at least one of the first flow ducts (148) and at least one of the second flow ducts (146) for coolant flow between the first flow ducts (148) and the second flow ducts (146).

15. Plug-in connector part (1) according to Claim 14, **characterized in that** a coolant flow between the first flow ducts (148) and the second flow ducts (146) via the at least one third flow duct (145) can be adjusted by means of an actuating element (142).

## Revendications

1. Pièce formant un connecteur enfichable (1), comportant
- une section enfichable (100, 101) destinée à être connectée de manière enfichable à une pièce formant un connecteur enfichable complémentaire (40) associée et
- au moins un élément de contact (11A, 11B), qui est disposé sur la section enfichable (100, 101) et comprend au moins une section de contact électriquement conductrice (111) destinée à être connectée de manière enfichable à un élément de contact complémentaire (41) associé de la pièce formant un connecteur enfichable complémentaire (40), et une section tige (110) se raccordant à la section de contact (111), servant à fixer un conducteur électrique (20) à l'élément de contact (11A, 11B),
**caractérisée par**
un élément douille (15) pouvant être placé sur la section tige (110) de l'au moins un élément de contact (11A, 11B), qui comprend un corps (150), une ouverture d'enfichage (158) formée dans le corps (150), destinée à recevoir la section tige (110), et un canal de refroidissement (159) formé dans ou sur le corps (150), s'étendant autour de l'ouverture d'enfichage (158), destinée à guider un fluide de refroidissement.

2. Pièce formant un connecteur enfichable (1) selon la revendication 1, **caractérisée en ce que** le canal de refroidissement (159) s'étend en forme d'hélice autour de l'ouverture d'enfichage (158).

3. Pièce formant un connecteur enfichable (1) selon la revendication 1 ou 2, **caractérisée en ce que** la section tige (110) est configurée sous forme cylindrique.

4. Pièce formant un connecteur enfichable (1) selon l'une quelconque des revendications 1 à 3, **caractérisée en ce que** l'élément de contact (11A, 11B) peut être enfiché sur l'élément de contact complémentaire (41) associé le long d'une direction d'enfichage (E), la section tige (110) comprenant une surface d'enveloppe (112) s'étendant circonférentiellement autour de la direction d'enfichage (E) et le corps (150) de l'élément douille (15) s'étendant autour de la surface d'enveloppe (112) lorsque la section tige (110) est reçue dans l'ouverture d'enfichage (158).

5. Pièce formant un connecteur enfichable (1) selon la revendication 4, **caractérisée en ce qu'**une pâte thermoconductrice est agencée entre la surface d'enveloppe (112) et le corps (150) de l'élément douille (15) lorsque la section tige (110) est reçue dans l'ouverture d'enfichage (158).

6. Pièce formant un connecteur enfichable (1) selon l'une quelconque des revendications précédentes, **caractérisée en ce que** le corps (150) de l'élément douille (15) est fabriqué en un matériau électriquement isolant et un fluide de refroidissement s'écoulant à travers le canal de refroidissement (159) est isolé électriquement de la section tige (110) par l'intermédiaire du corps (150) lorsque la section tige (110) est reçue dans l'ouverture d'enfichage (158).

7. Pièce formant un connecteur enfichable (1) selon l'une quelconque des revendications précédentes, **caractérisée en ce que** l'élément douille (15) est inséré dans un boîtier de refroidissement (13A, 13B).

8. Pièce formant un connecteur enfichable (1) selon la revendication 7, **caractérisée en ce que** l'élément douille (15) délimite, conjointement avec le boîtier de refroidissement (13A, 13B), le canal de refroidissement (159) .

9. Pièce formant un connecteur enfichable (1) selon la revendication 7 ou 8, **caractérisée en ce que** la pièce formant un connecteur enfichable (1) comprend une paire de deux éléments de contact (11A, 11B), un élément douille (15) et un boîtier de refroidissement (13A, 13B) étant agencés sur la section tige (110) de chaque élément de contact (11A, 11B).

10. Pièce formant un connecteur enfichable (1) selon la revendication 9, **caractérisée en ce que** les boîtiers de refroidissement (13A, 13B) des deux éléments de contact (11A, 11B) sont configurés en symétrie miroir l'un par rapport à l'autre et sont connectés l'un à l'autre.

11. Pièce formant un connecteur enfichable (1) selon l'une quelconque des revendications précédentes, **caractérisée par** un élément distributeur (14), qui comprend au moins un raccord d'entrée (140) pour l'entrée d'un fluide de refroidissement et au moins un raccord de sortie (141) pour la sortie du fluide de refroidissement.

12. Pièce formant un connecteur enfichable (1) selon la revendication 11, **caractérisée en ce que** l'élément distributeur (14) est connecté de manière fixe avec les boîtiers de refroidissement (13A, 13B) d'une paire d'éléments de contact (11A, 11B).

13. Pièce formant un connecteur enfichable (1) selon la revendication 12, **caractérisée en ce que** l'au moins un raccord d'entrée (140) est en connexion fluidique par l'intermédiaire de premiers canaux d'écoulement (148) avec une ouverture d'entrée (132) de chaque boîtier de refroidissement (13A, 13B) pour l'entrée d'un fluide de refroidissement dans le canal de refroidissement (159) de l'élément douille (15) agencé sur le boîtier de refroidissement (13A, 13B), et l'au moins un raccord de sortie (141) est en connexion fluidique par l'intermédiaire de deuxièmes canaux d'écoulement (146) avec une ouverture de sortie (133) de chaque boîtier de refroidissement (13A, 13B) pour la sortie d'un fluide de refroidissement du canal de refroidissement (159) de l'élément douille (15) agencé sur le boîtier de refroidissement (13A, 13B).

14. Pièce formant un connecteur enfichable (1) selon la revendication 13, **caractérisée en ce que** l'élément distributeur (14) comprend au moins un troisième canal d'écoulement (145), qui s'étend entre au moins un des premiers canaux d'écoulement (148) et au moins un des deuxièmes canaux d'écoulement (146) pour un flux de fluide de refroidissement entre les premiers canaux d'écoulement (148) et les deuxièmes canaux d'écoulement (146) .

15. Pièce formant un connecteur enfichable (1) selon la revendication 14, **caractérisée en ce qu'**un flux de fluide de refroidissement entre les premiers canaux d'écoulement (148) et les deuxièmes canaux d'écoulement (146) est ajustable par l'intermédiaire d'un élément de réglage (142) par l'intermédiaire de l'au moins un troisième canal d'écoulement (145).
